# EUROPÄISCHE PATENTANMELDUNG

(11) **EP 2 687 073 A1**
(43) Veröffentlichungstag der Anmeldung: **22.01.2014**
(21) Anmeldenummer: 13401073.5
(22) Anmeldetag: 15.07.2013
(51) Int. Cl.: A01B 15/10

(54) **Boden führende Werkzeuge für Bodenbearbeitungswerkzeuge**

(30) Priorität: 18.07.2012 DE 102012106463
(71) Anmelder: Amazonen-Werke H. Dreyer GmbH & Co. KG, 49205 Hasbergen (DE)
(72) Erfinder: Laumann, Bernhard, 48477 Hörstel - Riesenbeck (DE); Resch, Rainer, 49170 Hagen a TW (DE)

(57) **Zusammenfassung**

Die Erfindung bezieht sich auf ein Bodenbearbeitungsgerät mit zumindest einem Bodenmaterial führenden Werkzeug 1, insbesondere Pflug mit zumindest einem Pflugkörper 1 mit einem Bodenmaterial führenden Streichblech 2 oder Streichblechstreifen 2.1, welches mittels einer Kleberschicht 8 und vorzugsweise mittels eines Verbindungselementes an einem Tragkörper 5 befestigbar ist. Um das Werkzeug sowohl mittels einer Kleberschicht als auch mit einem Verbindungselement an dem Tragkörper befestigen zu können, ohne dass Bodenmaterial führende Bereiche des Werkzeuges beeinflusst sind, ist vorgesehen, dass das Werkzeug 1 zumindest einen im Wesentlichen orthogonal abstehenden, Bodenmaterial nicht führenden Befestigungsbereich 6 hat und dass das Werkzeug 1, 2.1 über den abstehenden Befestigungsbereich 6 mit dem Tragkörper 5 verbunden ist

## Beschreibung

Die Erfindung bezieht sich auf ein Bodenbearbeitungsgerät mit zumindest einem Bodenmaterial führenden Werkzeug, insbesondere einen Pflug mit zumindest einem Bodenmaterial führenden Streichblech oder einem oder mehreren Streichblechstreifen, welches mittels eines Verbindungselementes an einem Tragkörper befestigbar ist.

Ein solches Bodenbearbeitungsgerät ist aus der EP 1 586 229 B1 bekannt. Dieses Bodenbearbeitungsgerät, das insbesondere als Pflug ausgebildet ist mit einem Streichblech oder Streichblechstreifen als Werkzeug bzw. Werkzeuge, ist über einen mit dem Werkzeug mittels einer Klebeschicht verbundenen Befestiger mit dem Tragkörper verbunden. Dieser Befestiger ist an der Rückseite des Werkzeuges, insbesondere an der Rückseite eines Streichblechstreifens festgelegt, ohne dass eine zusätzliche Bohrung oder dergleichen Ausnehmung zur Anordnung eines Verbindungselementes vorzusehen ist. Das Werkzeug soll daher eine homogene Einheit bilden, ohne dass es durch irgendwelche Einflüsse in Bodenmaterial führenden Bereichen geschwächt ist. Die Befestigungseinheit ihrerseits hat eine Gewindebohrung, um über ein Verbindungselement mit dem Tragkörper verbunden zu sein. Damit das Werkzeug durch die Klebeschicht sicher an der Befestigungseinheit gehalten werden kann, ist eine exakte Vorbereitung des rückwärtigen Flächenbereiches als Klebebereich an dem Werkzeug vorzubereiten. Zudem ist ein exaktes Aufkleben dieser rückwärtigen Befestigungsfläche des Werkzeuges an dem Befestiger erforderlich, da zwischen dem Befestiger und dem Werkzeug kein weiteres Sicherungselement in Gestalt des Verbindungselementes vorgesehen werden kann. Dies ist nachteilig und kann im rauen Alltagsbetrieb eines derartigen Bodenbearbeitungswerkzeuges zu die Funktionsunfähigkeit des

Bodenbearbeitungsgerätes nach sich ziehenden Verschleißerscheinungen insbesondere an der Verbindung zwischen dem Werkzeug und der Befestigungseinheit führen.

Es ist daher Aufgabe der vorliegenden Erfindung, ein Bodenbearbeitungsgerät der eingangs genannten Art zu schaffen, bei dem die Verbindung zwischen dem Werkzeug und dem Tragkörper die Verschleißanfälligkeit vereinfacht ist bei hoher Verschleißunanfälligkeit des Bodenmaterials führenden Bereichs.

Zur Lösung dieser Aufgabe zeichnet sich das Bodenbearbeitungsgerät der eingangs genannten Art dadurch aus, dass das Werkzeug zumindest einen im Wesentlichen orthogonal abstehenden, Bodenmaterial nicht führenden Befestigungsbereich hat und dass das Werkzeug über den abstehenden Befestigungsbereich mit dem Tragkörper verbunden ist.

Damit ist ein Bodenbearbeitungsgerät geschaffen, bei dem zunächst das Bodenbearbeitungswerkzeug weiterhin mit dem Tragkörper verbunden werden kann. Dieser Verbindungsbereich ist jedoch nicht mehr an der Rückseite des Werkzeuges vorgesehen. Vielmehr hat das Werkzeug einen abstehenden Bereich, an dem der Verbindungsbereich oder eine Ausnehmung für das Verbindungselement vorzusehen ist. Dieser abstehende Bereich hat kein Bodenmaterial zu führen, so dass er im Hinblick auf den Verbindungsbereich und sonstige Verbindungselemente optimiert auszubilden ist. Die außerhalb dieses Befestigungsbereiches gelegenen Bodenwerkzeugbereiche und/oder Werkzeugflächen können im Hinblick auf die Anforderungen hinsichtlich der Führung des Bodenmaterials optimiert ausgebildet werden und mithin beispielsweise besondere Materialhärtungen, Beschichtungen und dergleichen aufweisen. Gleichwohl kann der abstehende Befestigungsbereich auch mit Ausnehmungen wie beispielsweise Bohrungen und dergleichen versehen sein, ohne dass dies auf die beispielsweise gehärteten Bereiche des Werkzeuges Einfluss nimmt. So ist es beispielsweise ohne weiteres möglich, in den abstehenden Befestigungsbereichen eine Bohrung vorzusehen, um dort eine Verschraubung oder Nieten hindurchzuführen, die mit dem Tragkörper zu verbinden sind.

Nach dem Verständnis der vorliegenden Patentanmeldung bedeutet im Wesentlichen orthogonal abstehend, dass dies ein umgebogener Bereich des Werkzeuges, beispielsweise eines Streichbleches oder eines Streichblechstreifens oder eines an diesen separat vorzusehenden Befestigungselementes sein kann, der nicht exakt um 90° umgebogen sein muss, sondern auch Änderungen zu der 90°-Ausrichtung in dem Bereich zulässt, so dass bei optimaler Ausrichtung der Flächen des Werkzeuges, die mit dem Bodenmaterial in Berührung kommen, eine exakte Verbindung zu dem Tragkörper gewährleistet ist. Somit sind auch abstehende Bereiche denkbar, die weniger oder mehr als eine 90° Abwinklung zulassen.

Weitere Ausgestaltungen der Erfindung ergeben sich aus weiteren Unteransprüchen, der nachfolgenden Beschreibung und der Zeichnung. In der Zeichnung zeigen:
- Fig. 1: ein Ausführungsbeispiel eines Werkzeuges für ein Bodenbearbeitungsgerät in Gestalt eines Streichbleches in Streifenkörperausbildung für einen Pflug als Bodenbearbeitungsgerät;
- Fig. 2: eine Schnittdarstellung gemäß der Schnittlinie II-II in Fig. 1, und
- Fig. 3: eine perspektivische Darstellung der Streichbleche als Werkzeuge des Bodenbearbeitungsgerätes im Bereich ihrer Befestigungsbereiche in abgeschnittener Ausbildung gemäß dem Ausführungsbeispiel nach Fig. 1.

In der Zeichnung sind grundsätzlich übereinstimmende Teile mit übereinstimmenden Bezugsziffern versehen.

Allgemein mit 1 ist in der Zeichnung ein Pflugkörper als Bodenbearbeitungsgerät beziffert, der ein Streichblech 2 aufweist, welches in dem dargestellten Ausführungsbeispiel mehrere einander zugeordnete Einzelstreichblechstreifen 2.1 aufweist.

Des Weiteren ist noch ein Scharblatt 3 sowie eine Scharspitze 4 vorgesehen. Die Einzelstreichblechstreifen 2.1 sind insgesamt an einem Tragkörper 5 gehaltert, und zwar mit abstehenden Befestigungsbereichen 6, die im Wesentlichen orthogonal zum angrenzenden, ohne jedwede Ausnehmungen oder sonstige Einschnürungen oder Schwächungen versehenen Bereichen der Einzelstreichblechstreifen 2.1 als Werkzeuge des Bodenbearbeitungsgerätes ausgebildet sind. Die Einzelbrechstreifen 2.1 als Werkzeuge des Bodenbearbeitungsgerätes 1 haben eine insgesamt schaufelartige bzw. kurvenförmige Gestaltung, so dass das Abstehen des Befestigungsbereiches 6 dazu den Winkel einnehmen kann - als sprachlich im Rahmen der vorliegenden Erfindung als orthogonal abstehend bezeichnet - der dieser Kontur derart folgt, dass der Einzelblechstreifen 2.1 als Werkzeug sicher mit dem Tragkörper 5 verbunden werden kann. Mithin sind auch Winkelbereiche möglich, die kleiner oder größer als 90° zum angrenzenden Bereich des Werkzeuges ausgerichtet sind. Maßgeblich ist, dass der Befestigungsbereich 6 so abgekröpft ist bzw. absteht, dass der Bodenmaterial führende Bereich des Einzelblechstreifens 2.1 keinerlei Schwächung durch Klebeverbindungen oder Bohrungen zur Aufnahme von Verbindungselementen aufweist, sondern dass dies alles in dem abstehenden Bereich 6 geschehen kann.

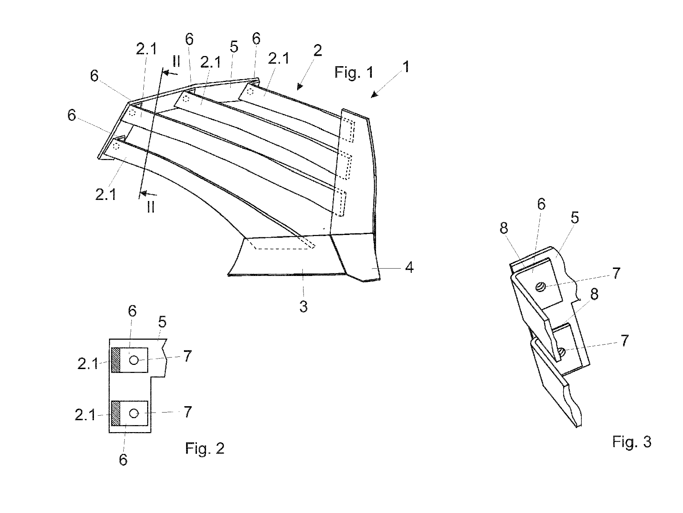

Wie näher aus den Fig. 2 und 3 hervorgeht, hat dieser abstehende Befestigungsbereich 6 eine Bohrung 7, in die ein nicht dargestelltes Verbindungselement, wie beispielsweise eine Schraube oder ein Niet eingebracht werden kann. Dadurch ist der Befestigungsbereich 6 sicher mit dem Tragkörper zu verbinden, wobei das entsprechende Verbindungselement eine Anschlagfläche als mechanische Sicherung bildet. Zwischen dem Befestigungsbereich 6 und dem Tragkörper 5 kann zudem eine Klebeschicht 8 vorgesehen, durch die der Streichblechstreifen 2.1 sicher mit dem Tragkörper verklebt und damit befestigt werden kann. Auch ist es möglich, ein Verbindungselement, welches mit dem Tragkörper zu verbinden ist, an dem Befestigungsbereich 6 anzukleben.

## Patentansprüche

1. Bodenbearbeitungsgerät mit zumindest einem Bodenmaterial führenden Werkzeug (1), insbesondere Pflug mit zumindest einem Pflugkörper (1) mit einem Bodenmaterial führenden Streichblech (2) oder Streichblechstreifen (2.1), welches mittels eines Verbindungselementes an einem Tragkörper (5) befestigbar ist, **dadurch gekennzeichnet, dass** das Werkzeug (1) zumindest einen im Wesentlichen orthogonal abstehenden, Bodenmaterial nicht führenden Befestigungsbereich (6) hat und dass das Werkzeug (1, 2.1) über den abstehenden Befestigungsbereich (6) mit dem Tragkörper (5) mittels zumindest eines Verbindungselementes verbunden ist.

2. Bodenbearbeitungsgerät nach Anspruch 1, **dadurch gekennzeichnet, dass** der Bodenmaterial führende Bereich des Werkzeuges (1, 2.1) homogen ohne Ausnehmungen, Bohrungen und dgl. Ausbildungen ausgebildet ist.

3. Bodenbearbeitungsgerät nach Anspruch 1 oder 2, **dadurch gekennzeichnet, dass** der abstehende Befestigungsbereich (6) durch einen umgebogenen Endbereich des Werkzeugs (1, 2.1) gebildet wird.

4. Bodenbearbeitungsgerät nach einem der Ansprüche 1 bis 3, **dadurch gekennzeichnet, dass** der Befestigungsbereich (6) des Werkzeuges (1, 2.1) über zumindest ein zusätzliches Verbindungselement mit dem Tragkörper (5) verbunden ist.

5. Bodenbearbeitungsgerät nach Anspruch 4, **dadurch gekennzeichnet, dass** der Befestigungsbereich (6) des Werkzeuges (1, 2.1) zumindest eine Lochausnehmung (7) aufweist, die von zumindest einem Verbindungselement durchsetzt ist.

6. Bodenbearbeitungsgerät nach Anspruch 4 oder 5, **dadurch gekennzeichnet, dass** der Befestigungsbereich (6) mit dem Tragkörper (5) verschraubt und/oder vernietet ist.
